Europäisches Patentamt

European Patent Office

Office européen des brevets

(19)

(11) Numéro de publication: **0 260 196**
**A1**

# (12) DEMANDE DE BREVET EUROPEEN

(21) Numéro de dépôt: 87401997.9

(22) Date de dépôt: 07.09.87

(51) Int. Cl.⁴: **F 16 D 3/20**
**B 60 K 17/16**

(30) Priorité: 08.09.86 FR 8612557

(43) Date de publication de la demande:
16.03.88 Bulletin 88/11

(84) Etats contractants désignés: **DE GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Chrétien Philippe**
**81, rue E. Labiche**
**F-78290 Croissy/Seine (FR)**

**Hulin, René**
**35, rue Charles Floquet**
**F-92500 Rueil Malmaison (FR)**

(74) Mandataire: **Moncheny, Michel et al**
**c/o Cabinet Lavoix 2 Place d'Estienne d'Orves**
**F-75441 Paris Cedex 09 (FR)**

(54) Dispositif de liaison entre un groupe moto-propulseur et un arbre de transmission de véhicule.

(57) Ce dispositif de liaison entre un pignon conique (6) de sortie d'un groupe moto-propulseur situé à l'intérieur de son carter (1) et un arbre de transmission (14) disposé à l'extérieur de ce carter, comprend un joint homocinétique (8-13), du type à tripode, dont le boîtier (8) délimitant trois chemins de roulement constitue un prolongement axial de l'organe de sortie supporté à rotation dans un logement (2) du carter du groupe moto-propulseur.

FIG.1

EP 0 260 196 A1

## Description

### Dispositif de liaison entre un groupe motopropulseur et un arbre de transmission de véhicule.

La présente invention concerne les dispositifs de liaison entre un organe de sortie d'un groupe moto-propulseur et un arbre de transmission, notamment pour un véhicule dans lequel le groupe moto-propulseur est disposé transversalement tandis que l'arbre de transmission est orienté longitudinalement.

Il est connu, notamment d'après le document FR-A-2 539 357, de réaliser une telle liaison au moyen d'un joint homocinétique du type à tripode, disposé à l'extrémité d'un tronçon d'arbre qui prolonge le pignon de sortie et qui est supporté dans le carter du groupe moto-propulseur par deux roulements coniques.

Dans un tel agencement, le joint homocinétique est disposé entièrement en porte-à-faux. Il en résulte un encombrement important. De plus, ce porte à faux du joint homocinétique par rapport aux roulements qui guident et supportent le tronçon d'arbre est susceptible d'engendrer ou d'amplifier des vibrations, principalement verticales, nuisables au confort et à la fiabilité du véhicule.

L'invention a donc pour but de remédier à ces inconvénients et de réaliser un accouplement articulé, fiable et peu encombrant, entre le pignon conique de sortie du groupe moto-propulseur et l'arbre de transmission.

A cet effet, l'invention a pour objet un dispositif de liaison entre un pignon conique de sortie d'un groupe moto-propulseur, disposé à l'intérieur d'un carter, et un arbre de transmission disposé à l'extérieur de ce carter, comprenant un joint homocinétique dont un premier élément est relié au pignon conique et dont un deuxième élément est relié à l'arbre de transmission, le joint homocinétique étant du type à tripode, dont le premier élément est un boîtier délimitant trois chemins de roulement, tandis que le deuxième élément est un tripode portant trois tourillons radiaux, régulièrement espacés angulairement sur lesquels sont montés rotatifs et coulissants, des galets coopérant avec les chemins de roulement, caractérisé en ce que le boîtier constitue un prolongement axial du pignon conique et ce boîtier est ouvert latéralement et comporte trois branches délimitant lesdits chemins de roulement, ce boîtier étant supporté à rotation dans un logement du carter par l'intermédiaire de deux roulements emmanchés sur le boîtier.

Suivant d'autres caractéristiques :
- les deux roulements sont maintenus sur le boîtier par un épaulement radial prévu sur ce boîtier au voisinage du pignon conique de sortie du groupe et par une bague emmanchée ou vissée sur l'extrémité du boîtier opposée à celle où se trouve ledit pignon;
- ladite bague coopère avec un anneau d'étanchéité protégeant les roulements;
- un soufflet d'étanchéité de protection du joint prend appui à l'une de ses extrémités sur ladite bague ou sur un organe de fixation de cette bague sur le boîtier;

- l'ensemble formé par le pignon conique, le joint homocinétique et les roulements est maintenu sur le carter par un anneau fixé sur ce carter par tout moyen convenable.

L'invention va être décrite plus en détail ci-après en se référant aux dessins annexés, donnés uniquement à titre d'exemples et sur lesquels :
    - la Fig. 1 est une vue en coupe longitudinale d'un dispositif selon l'invention;
    - la Fig. 2 est une vue partielle en coupe selon la ligne 2-2 de la Fig. 1, certains organes ayant été omis, dans un but de clarté;
    - les Fig. 3 à 6 sont des vues analogues à celle de la Fig. 1, représentant des variantes.

Aux dessins, la référence 1 représente une partie du carter d'un groupe moto-propulseur. Ce carter délimite un logement cylindrique 2 se terminant au voisinage de la face interne du carter par un épaulement radial 3. Dans la zone entourant le logement 2, la face externe 4 du carter est plane et comporte des trous taraudés 5 répartis autour du logement 2.

A l'intérieur du carter 1 est logé un organe de sortie du groupe moto-propulseur, constitué ici par un pignon conique 6. Selon l'invention, ce pignon conique est prolongé axialement par trois branches 7, venues de matière, qui constituent avec le fond du pignon un boîtier 8 d'un joint homocinétique de type à tripode. Ces trois branches délimitent, comme connu en soi, trois chemins de roulement 9 rectilignes, de section transversale circulaire, l'extrémité 10 du boîtier, opposée au pignon conique 6 est ouverte et reçoit un tripode 11 comportant trois tourillons radiaux 12, régulièrement espacés angulairement et sur lesquels sont montés rotatifs et coulissants des galets 13 de forme sphérique, qui coopèrent avec les chemins de roulement 9. Le tripode 11 est solidaire d'un arbre de transmission 14.

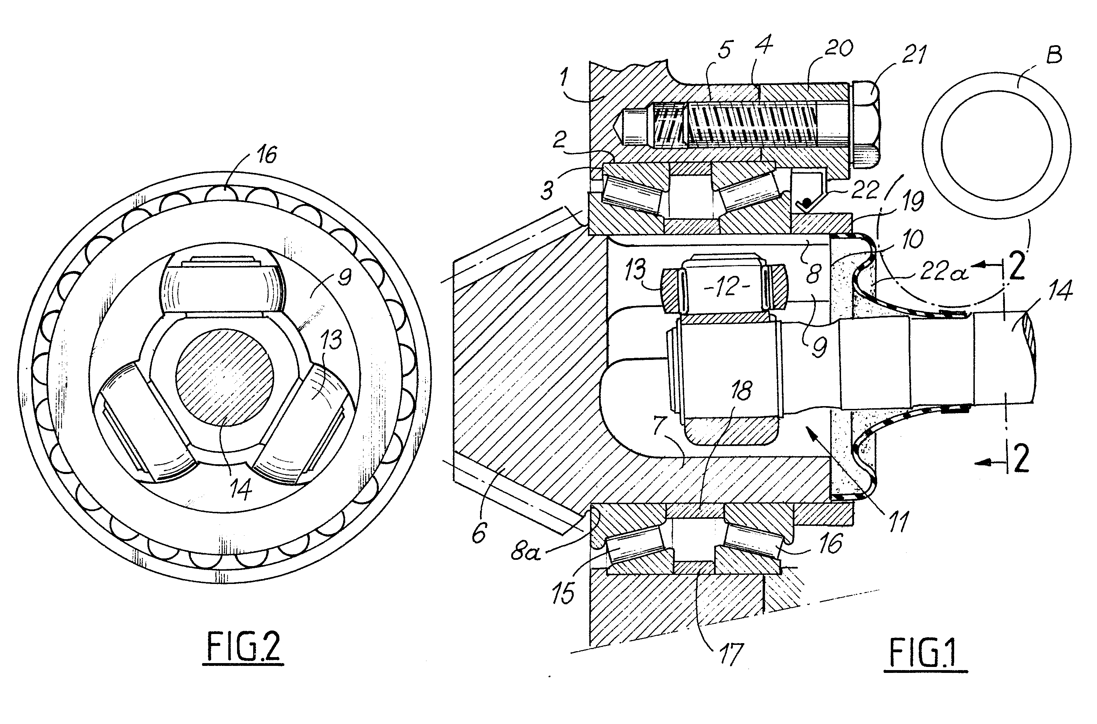

Egalement selon l'invention, le boîtier 8 du joint homocinétique est supporté à rotation à l'intérieur du logement 2 du carter par l'intermédiaire de deux roulements coniques 15, 16, montés en opposition et espacés l'un de l'autre par deux entretoises annulaires 17 et 18. Cet ensemble des deux roulements est emmanché sur le boîtier et maintenu axialement entre un épaulement radial 8a et une bague 19 emmanchée sur l'extrémité du boîtier. Dans un premier mode de réalisation (Figure 1), cette bague 19 est immobilisée par frettage et/ou collage sur le boîtier.

L'ensemble formé par le pignon 6, le joint homocinétique et les roulements est maintenu sur le carter entre l'épaulement 3 et un anneau 20 comportant une surface interne étagée et lui-même fixé sur le carter par des vis 21.

Cet agencement est complété, d'une part, par un anneau d'étanchéité 22 disposé entre la bague 19 et l'anneau 20 et, d'autre part, par un soufflet d'étanchéité 22a disposé entre la bague 19 et l'arbre de transmission 14.

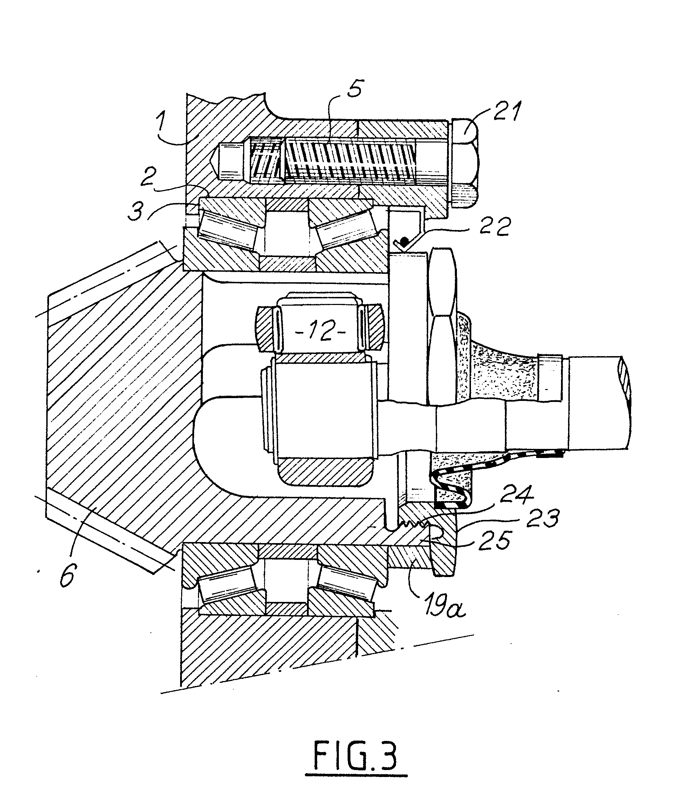

Plusieurs variantes de réalisation sont représentées aux Fig. 3 à 6 : sur la Fig. 3, une bague 19a est emmanchée sur la surface extérieure du boîtier et est immobilisée par un organe de serrage 23 muni d'un embout fileté 24 vissé sur une extrémité 25 également filetée, du boîtier. Le soufflet d'étanchéité est alors fixé sur cet organe 23.

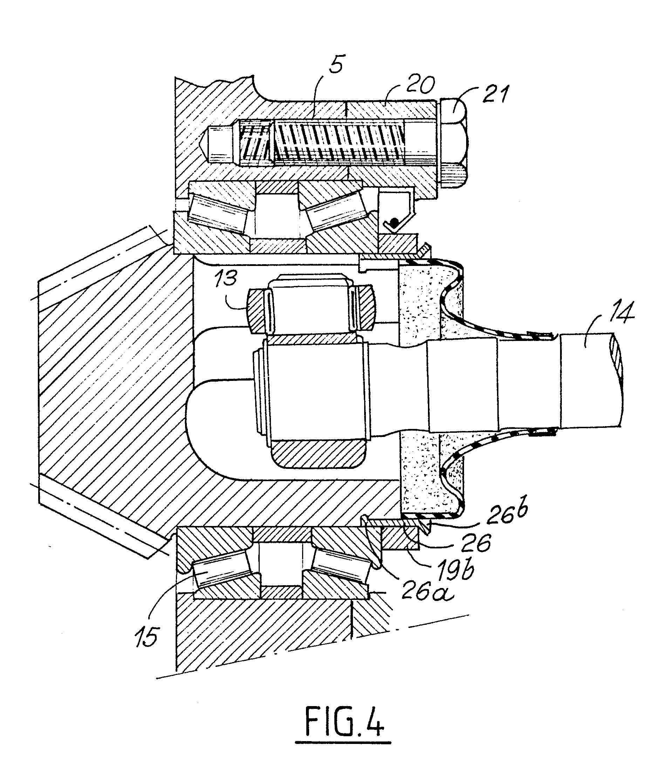

Dans le mode de réalisation de la Fig. 4, une bague 19b est immobilisée par rapport au boîtier au moyen d'une douille 26 sertie d'un côté 26a dans une rainure 27 prévue dans chaque branche du boîtier, et de l'autre côté, 26b, sur la bague 19b. Dans ce cas, le soufflet d'étanchéité est fixé sur la douille 26.

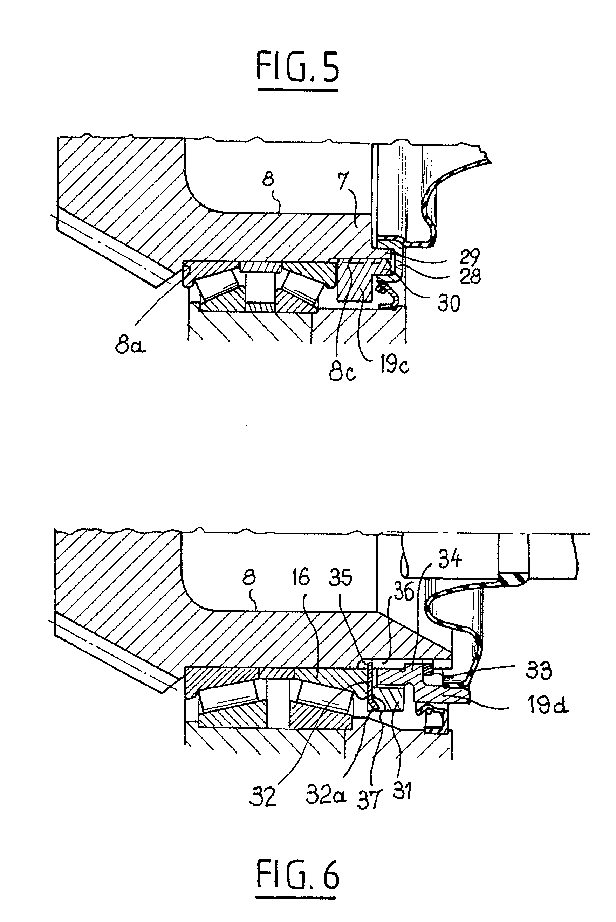

Dans le mode de réalisation de la Fig. 5, une bague 19c filetée intérieurement est vissée sur l'extrémité 8c filetée extérieurement du boîtier 8. Un anneau 28 ayant une section en U enserre radialement l'une contre l'autre des collerettes extrêmes 29, 30 du boîtier et de la bague, évitant ainsi que les branches 7 du boîtier ne se déforment de façon centripète sous l'action du vissage de la bague 19c. Le soufflet et l'anneau d'étanchéité prennent appui sur l'anneau 28.

La Fig. 6 montre une variante où une bague filetée 19d portant un écrou 31 est enserrée axialement, par vissage de ce dernier, entre une rondelle 32 disposée contre la face extérieure du roulement 16 et un jonc circulaire 33 engagé dans une gorge annulaire du boîtier 8. La bague et la rondelle sont chacune immobilisées en rotation par une saillie interne 34, 35 engagée dans une rainure 36 rectiligne du boîtier. L'écrou est arrêté en rotation par sertissage d'une portion périphérique 32a de la rondelle dans un évidement 37 de l'écrou.

Les avantages qu'offre le dispositif suivant l'invention résultent directement de la description qui vient d'être faite : étant donné que le boîtier du joint homocinétique est venu de matière avec le pignon conique et prolonge directement ce dernier, il peut être supporté directement par les roulements dans le logement 2 du carter. Il ne présente de ce fait aucun porte-à-faux par rapport à ce carter, de sorte que l'encombrement dans cette zone du véhicule est réduit. Ceci est illustré à la Fig. 1 où l'on a représenté en traits pleins un organe du véhicule, tel qu'un boîtier de direction B, dans une première position relative par rapport au groupe moto-propulseur, la position en trait mixte correspondant à une deuxième position relative, après débattement du groupe moto-propulseur. On sait que ce groupe, étant disposé transversalement par rapport à la direction longitudinale du véhicule, oscille légèrement autour d'un axe orthogonal à l'arbre 14 et situé du côté opposé à celui-ci par rapport au joint homocinétique. Ce joint étant, selon l'invention, plus près du pignon conique et donc de l'axe d'oscillation que dans les agencements antérieurs, à un débattement angulaire donné du groupe correspond un plus faible débattement de l'arbre de transmission. Il en résulte que le joint homocinétique travaille dans de meilleurs conditions.

L'encombrement est également réduit du fait que l'on peut utiliser dans le joint homocinétique un boîtier ouvert latéralement et présentant donc une dimension radiale minimale. Les trois branches de ce boîtier sont en effet maintenues radialement par les roulements et par la bague 19 (19a, 19b, 19c, 19d), ce qui empêche toute expansion radiale de ces branches. Ceci est particulièrement utile dans le mode de réalisation de la Fig. 3 où le vissage de l'organe de serrage 23 pourrait provoquer une telle expansion.

## Revendications

1. Dispositif de liaison entre un pignon conique (6) de sortie d'un groupe moto-propulseur, disposé à l'intérieur d'un carter (1), et un arbre de transmission (14) disposé à l'extérieur de ce carter, comprenant un joint homocinétique (8-13) dont un premier élément (8) est relié au pignon conique (6) et dont un deuxième élément (11) est relié à l'arbre de transmission (14), le joint homocinétique étant du type à tripode, dont le premier élément (8) est un boîtier délimitant trois chemins de roulement (9), tandis que le deuxième élément est un tripode (11) portant trois tourillons radiaux (12), régulièrement espacés angulairement sur lesquels sont montés rotatifs et coulissants des galets (13) coopérant avec les chemins de roulement, caractérisé en ce que le boîtier (8) constitue un prolongement axial du pignon conique (6) et ce boîtier (8) est ouvert latéralement et comporte trois branches (7) délimitant lesdits chemins de roulement, ce boîtier étant supporté à rotation dans un logement (2) du carter par l'intermédiaire de deux roulements (15, 16) emmanchés sur le boîtier.

2. Dispositif selon la revendication 1, caractérise en ce que les deux roulements (15, 16) sont maintenus sur le boîtier (8) par un épaulement radial (8a) prévu sur le boîtier au voisinage du pignon conique (6) et par une bague (19; 19a; 19b; 19d) emmanchée sur l'extrémité du boîtier opposée à celle où se trouve le pignon conique.

3. Dispositif selon la revendication 2, caractérisé en ce que ladite bague (19) est fixée sur le boîtier par frettage et/ou collage.

4. Dispositif selon la revendication 2, caractérisé en ce que ladite bague (19a) est fixée sur le boîtier au moyen d'un embout fileté (23, 24), vissé sur l'extrémité (24) du boîtier.

5. Dispositif selon la revendication 2, caractérisé en ce que ladite bague (19b) est fixée sur le boîtier au moyen d'une douille (26) sertie sur le boîtier et sur la bague.

6. Dispositif selon la revendication 2, caractérisé en ce que ladite bague (19d) est serrée, entre un jonc circulaire (33) engagé dans une gorge annulaire du boîtier (8) et une rondelle (32) disposée contre une face externe du roulement adjacent (16), par un écrou (31) coopérant avec un filetage externe de ladite bague (19d) et en appui sur la rondelle (32).

7. Dispositif selon la revendication 6, caractérisé en ce que la bague (19d) et la rondelle (32) comportent chacune une saillie interne (34, 35) coopérant avec une rainure (36) axiale du boîtier, pour les immobiliser en rotation par rapport au boîtier, et en ce que l'écrou (31) comporte un évidement (37) dans lequel est sertie une portion périphérique (32a) de la rondelle (32) pour immobiliser celle-ci en rotation par rapport à l'écrou (31).

8. Dispositif selon la revendication 1, caractérisé en ce que les deux roulements (15, 16) sont maintenus sur le boîtier (8) par un épaulement radial (8a) prévu sur le boîtier au voisinage du pignon conique (6) et par une bague (19c) filetée intérieurement et coopérant avec une partie (8c) filetée extérieurement de l'extrémité du boîtier.

9. Dispositif selon la revendication 8, caractérisé en ce que l'extrémité du boîtier et la bague (19c) comportent deux collerettes axiales adjacentes (29, 30) maintenues par un anneau (28) à section en U.

10. Dispositif selon l'une quelconque des revendications 2 à 9, caractérisé en ce que ladite bague coopère avec un anneau d'étanchéité (22) protégeant les roulements (15, 16).

11. Dispositif selon l'une quelconque des revendications 2 à 10, caractérisé en ce qu'un soufflet (22a) d'étanchéité et de protection du joint prend appui à l'une de ses extrémités sur ladite bague ou sur un organe de fixation de cette bague sur le boîtier.

12. Dispositif selon l'une quelconque des revendications 1 à 11, caractérisé en ce que l'ensemble comprenant le pignon conique (6), le joint homocinétique (8-13) et les roulements (15, 16) est maintenu sur le carter (1) par un anneau (20) fixé sur ce carter.

FIG.2

FIG.1

0260196

0260196

FIG.3

FIG.4

FIG.5

FIG.6

**Office européen des brevets**

# RAPPORT DE RECHERCHE EUROPEENNE

Numero de la demande

EP 87 40 1997

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 373 897 (JONES) <br> * En entier * | 1-5,10-12 | F 16 D 3/20 <br> B 60 K 17/16 |
| A | | 6 | |
| Y | FR-A-2 339 098 (SHARP) <br> * Pages 13,14; figure 9 * | 1-5,10-12 | |
| Y | US-A-2 174 261 (GRISWOLD) <br> * En entier * | 2,3 | |
| A | | 4 | |
| Y | FR-A- 972 116 (BRISTOL AEROPLANE) <br> * En entier * | 2,4 | |
| Y | US-A-2 101 130 (CHRISTMAN) <br> * En entier * | 5 | |
| Y | DE-A-2 802 228 (CATERPILLAR TRACTOR) <br> * En entier * | 10,12 | |
| A | | 1,2 | **DOMAINES TECHNIQUES RECHERCHES (Int. Cl.4)** |
| Y | FR-A-1 230 181 (BIRFIELD ENGINEERING) <br> * En entier * | 11 | F 16 D 3/00 <br> B 60 K <br> F 16 C |
| Y | FR-A-1 205 519 (WAHLMARK) <br> * En entier * | 1,12 | |
| Y | FR-A- 982 919 (USINES CHAUSSON) <br> * En entier * | 1,12 | |

Le présent rapport a été établi pour toutes les revendications

| Lieu de la recherche | Date d'achèvement de la recherche | Examinateur |
|---|---|---|
| LA HAYE | 26-11-1987 | BALDWIN D.R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................

& : membre de la même famille, document correspondant

EPO FORM 1503 03.82 (P0402)